# EUROPEAN PATENT APPLICATION

(11) **EP 4 564 251 A1**
(43) Date of publication of application: **04.06.2025**
(21) Application number: 23860375.7
(22) Date of filing: 29.08.2023
(51) Int. Cl.: G06Q 10/0631, G06Q 30/0645, G06Q 40/06

(54) **INFORMATION PROCESSING DEVICE, INFORMATION PROCESSING METHOD, AND PROGRAM**

(30) Priority: 30.08.2022 JP 2022137174
(71) Applicant: Realize Corporation, Inc., Tokyo 106-6134 (JP)
(72) Inventor: IMAFUKU Yosuke, Tokyo 106-6134 (JP)
(74) Representative: Ström & Gulliksson AB
(86) International application number: PCT/JP2023/031337
(87) International publication number: WO 2024/048613

(57) **Abstract**

The present invention efficiently manages a plurality of businesses and develops the plurality of businesses together with respect to organizations which operate the plurality of businesses concerning common subjects. Various kinds of information acquisition unit 51 acquires various kinds of information transmitted and received when each of a business processing unit 21, a vehicle processing unit 22, and an accounting processing unit 23 executes various processes. A lease information generation unit 52 extracts, from the acquired various kinds of information, information about a lease business, and generates lease information on the basis of the extracted information. A fund information generation unit 53 extracts, from the acquired various kinds of information, information pertaining to a truck fund and generates fund information on the basis of the extracted information. A vehicle information generation unit 54 extracts, from the acquired various kinds of information, information pertaining to a truck T and generates vehicle information on the basis of the extracted information. A consolidated information generation unit 55 associates the lease information, the fund information, and the vehicle information with each other, generates consolidated information, and stores and manages the consolidated information in a consolidation DB11.

## Description

### TECHNICAL FIELD

The present invention relates to an information processing apparatus, an information processing method, and a program.

### BACKGROUND ART

There has been conventionally proposed a database for performing vehicle sales management (see, for example, Patent Document 1).

### Citation List

### Patent Document

Patent Document 1: Japanese Unexamined Patent Application, Publication No. 2009-129286

### DISCLOSURE OF THE INVENTION

### Problems to be Solved by the Invention

However, though it is demanded among such organizations that run a plurality of businesses among which objects are common, with vehicles to be leased as the objects (for example, the present applicant) to efficiently perform management of the plurality of businesses and develop the plurality of businesses together, the present situation is that conventional techniques including Patent Document 1 cannot respond to such a demand. Such a demand commonly exists not only in the case where the objects are vehicles but also in the case where products or objects provided for providing services of a plurality of businesses are common among the businesses.

The present invention has been made in view of such a situation, and an object is to, for an organization which runs a plurality of businesses among which products or objects provided for providing services are common, establish management of information that contributes to efficiently performing management of the plurality of businesses and developing the plurality of businesses together.

### Means for Solving the Problems

To achieve the object described above, an information processing apparatus according to an aspect of the present invention is
an information processing apparatus managing information for supporting a predetermined organization when the predetermined organization runs N businesses (N is an integer value equal to or larger than 2), and products or objects provided for services of the N businesses are common objects, the information processing apparatus including:
an information acquisition unit acquiring information related to at least a part of the N businesses and the objects;
a business information generation unit extracting pieces of information about a predetermined business from the information acquired, for the N businesses, respectively and independently, and generating first business information to N-th business information based on the pieces of information extracted for the N businesses, respectively;
an object information generation unit extracting information about the objects from the information acquired and generating object information based on the information extracted; and
an integrated information generation unit generating integrated information by associating the first business information to the N-th business information and the object information, storing the integrated information in a predetermined database, and managing the integrated information.

Furthermore, the information processing apparatus according to an aspect of the present invention can take the following configuration. That is, the information processing apparatus can also be configured such that the objects are vehicles;
the N businesses include a lease business of leasing the vehicles to a lessor and a fund with the vehicles leased to the lessor as a target;
the business information generation unit includes:
   a lease information generation unit extracting information related to the lease business from the information acquired and generating lease information as the first business information based on the information extracted; and
   a fund information generation unit extracting information related to the fund from the information acquired and generating fund information as the second business information based on the information extracted;
   the object information generation unit extracts information related to the vehicles from the information acquired and generates vehicle information as the object information based on the information extracted; and
   the integrated information generation unit generates the integrated information by associating the lease information, the fund information, and the vehicle information.

An information processing method and a program according to aspects of the present invention are a method and a program corresponding to the information processing apparatus according to the aspects of the present invention described above.

### Effects of the Invention

According to the present invention, it is possible to, for an organization which runs a plurality of businesses among which products or objects provided for providing services are common, establish management of information that contributes to efficiently performing management of the plurality of businesses and developing the plurality of businesses together.

### BRIEF DESCRIPTION OF THE DRAWINGS

FIG. 1 is an image diagram illustrating an outline of the present service that can be realized by various types of processing executed by a server according to an embodiment of an information processing apparatus of the present invention;
FIG. 2 is a diagram illustrating an outline of a configuration of an information processing system to which the present service of FIG. 1 is applied, that is, an information processing system that includes a service provider server according to the one embodiment of the information processing apparatus of the present invention;
FIG. 3 is a block diagram illustrating a hardware configuration of the service provision server of FIG. 2;
FIG. 4 is a functional block diagram illustrating an example of a functional configuration of the service provision server of FIG. 3;
FIG. 5 is a diagram illustrating an example of a screen for registering or confirming customers of a company that runs a lease business and a truck fund and uses the present service of FIG. 1;
FIG. 6 is a diagram illustrating an example of a screen for registering or confirming customers of the company that runs the lease business and the truck fund and uses the present service of FIG. 1, which is different from the example of FIG. 5;
FIG. 7 is a diagram illustrating an example of a screen for registering or confirming customers of the company that runs the lease business and the truck fund and uses the present service of FIG. 1, which is different from the examples of FIGS. 5 and 6;
FIG. 8 is a diagram illustrating an example of a screen for registering or confirming customers of the company that runs the lease business and the truck fund and uses the present service of FIG. 1, which is different from the examples of FIGS. 5 to 7;
FIG. 9 is a diagram illustrating an example of a screen for registering or confirming customers of the company that runs the lease business and the truck fund and uses the present service of FIG. 1, which is different from the examples of FIGS. 5 to 8;
FIG. 10 is a diagram illustrating an example of a screen for registering trucks (vehicles) owned by the company or the truck fund that uses the present service of FIG. 1;
FIG. 11 is a diagram illustrating an example of a screen for confirming information registered as the trucks owned by the company or truck fund that uses the present service of FIG. 1 using the screen of the example of FIG. 10;
FIG. 12 is a diagram illustrating an example of a screen used by the company that uses the present service of FIG. 1, which is a screen for, after a contract with a customer for a predetermined truck the vehicle information about which exists is completed, generating journal entry data for the target lease contract in the lease business;
FIG. 13 is a diagram illustrating an example of a screen used by the company that uses the present service of FIG. 1, which is a screen for confirming journal entry data for each of a plurality of trucks for which vehicle information exists;
FIG. 14 is a diagram illustrating an example of an image for registering or confirming data of photographs taken at the time of incoming delivery of a predetermined truck returned because of expiry of a lease contract period to a predetermined yard, as a part of vehicle information about the predetermined truck;
FIG. 15 is a diagram illustrating an example of an image for registering or confirming data of a result of an inspection conducted at the time of the incoming delivery of the predetermined truck returned because of expiry of the lease contract period to the predetermined yard, as a part of the vehicle information about the predetermined truck;
FIG. 16 is a diagram illustrating the example of the image for registering or confirming data of a result of an inspection conducted at the time of the incoming delivery of the predetermined truck returned because of expiry of the lease contract period to the predetermined yard, as a part of the vehicle information about the predetermined truck;
FIG. 17 is a diagram illustrating an example of a predetermined page of a Website where information about uncontracted trucks that are candidates for being leased in a lease business are displayed;
FIG. 18 illustrates a screen used by the company that uses the present service of FIG. 1, which is a screen for inputting basic information, among screens for composing a truck fund;
FIG. 19 illustrates a screen used by the company that uses the present service of FIG. 1, which is a screen for selecting t trucks (t is an integer value equal to or larger than 1) to be incorporated and inputting information about the t trucks, among the screens for composing a truck fund;
FIG. 20 is a diagram illustrating an example of a screen for confirming journal entry of charges from the truck fund to the company (lease charges of the incorporated trucks);
FIG. 21 is a diagram illustrating an example of a screen for confirming journal entry of charges from the company to the truck fund (management costs and the like);
FIG. 22 is a diagram illustrating an example of a screen for registering a financial summary in account settlement information about a truck fund; and
FIG. 23 is a diagram illustrating the example of the screen for registering the financial summary in the account settlement information about the truck fund; and
FIG. 24 illustrates an example of a business report of a truck fund F.

### PREFERRED MODE FOR CARRYING OUT THE INVENTION

An embodiment of the present invention will be described below with reference to accompanying drawings.

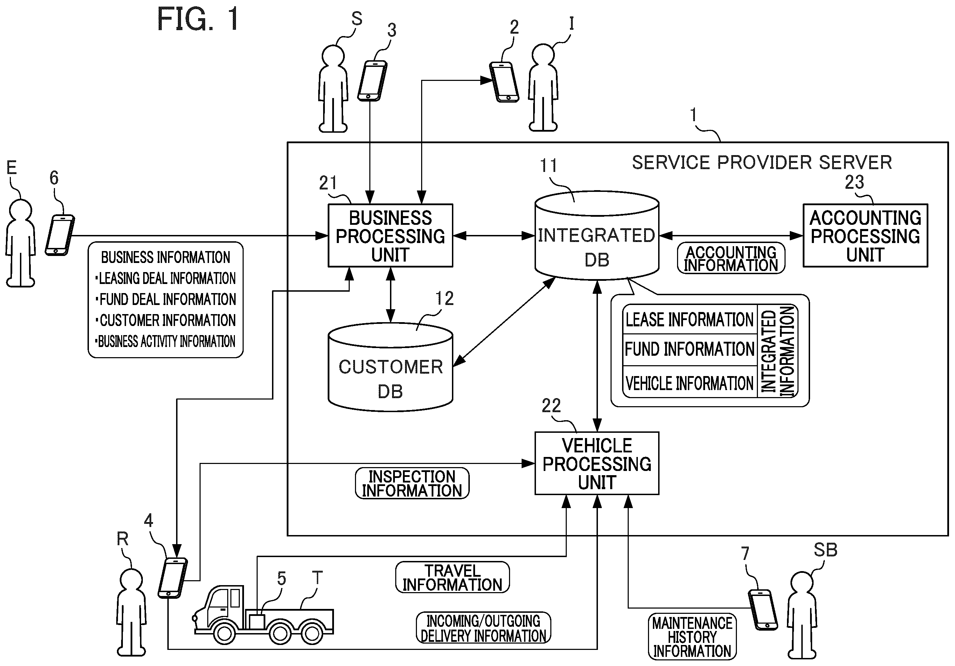

FIG. 1 is an image diagram illustrating an outline of the present service that can be realized by various types of processing executed by a server according to an embodiment of an information processing apparatus of the present invention;

As illustrated in FIG. 1, the present service provides a DB suitable for a person who belongs to a company that runs a plurality of businesses. Note herein that the plurality of businesses are not especially limited if they are businesses in which products or objects provided for providing services are common. For convenience of description, it is assumed that a lease business for commercial cargo transport vehicles T (hereinafter called "trucks T") and a fund for the trucks T (hereinafter referred to as "the truck fund") are adopted.

The lease business is as follows. Transport companies R have conventionally had a problem of increase in costs related to vehicle procurement of trucks T. That is, in the transport field and the physical distribution field, it has been common to procure trucks using finance lease (borrowing money to purchase trucks T). Therefore, initial costs required for plant and equipment investment and monthly maintenance/management costs after purchasing the trucks T have been a big burden. Recently, increases in fuel prices, decreases in transport charges, and the like have also been added to the burden. Therefore, a lease business for procuring trucks T using operating leases is provided for the transport companies R. That is, a business that realizes a mechanism of, by the transport companies R not "purchasing" the trucks T but "borrowing" the trucks T only when necessary, such as at the time of business expansion, leveling out the procurement and maintenance/managements costs for the trucks T is the lease business. That is, the trucks T are valuable assets for the transport companies R. It is, however, a fact for the transport companies R that it is putting pressure on management to continue owning the trucks T. Therefore, by utilizing the lease business to transition from "management by ownership" to "management without ownership", it becomes possible for the transport companies R to improve their financial structures.

Furthermore, it is also possible for the transport companies R to take advantage of the lease business to shift to aggressive management. Note herein that, as advantages of the transport companies R utilizing the lease business, first to fourth advantages exist. The first advantage is that the assets (the trucks T) of the transport companies R can be taken off the balance sheets. The second advantage is that means for procuring the trucks T increase. The third advantage is that it is possible to lease the trucks T even for a short period (one to three years). The fourth advantage is that the vehicle procurement costs can be leveled out.

Furthermore, when the company that uses the present service runs a lease business, the company can utilize an integrated DB 11 described later. Thereby, as the advantages of the transport companies R utilizing the lease business, fifth to eighth advantages are added. The fifth advantage is that, since the company can secure a large number of trucks T, it is possible to deliver vehicles in three days at the earliest and promptly respond at the time of breakdown. The sixth advantage is to make it possible to reduce the burden of vehicle inspection/repair charges, vehicle tax, and the like. The seventh advantage is to make it possible to use green number plates. The eighth advantage is to make it possible to respond to lease back with a high purchase price. Note herein that the eighth advantage will be described in detail. Since the company that uses the integrated DB 11 described later can operate the trucks T for a long time, it becomes possible for the company to assess and purchase the trucks T at a higher price in comparison with general used-vehicle buyers. Thereby, it becomes possible to be effective even for sudden capital procurement of the transport companies R. Meanwhile, it becomes possible to set a lease price of the trucks low. Thereby, for the trucks T, it becomes possible for the transport companies R to "sell at a high price and lease at a low price" and "continue use without ownership".

The lease business run by the company has been described above. Next, the truck fund run by the company will be described. Note that the details of the truck fund will be simply described below because the details are described in Patent Publication No. 6554652 by the present applicant.

The truck fund is a new fund that can support the transport companies R. That is, the truck fund is a fund with high contribution to society that leads to management support to the transport companies R and revitalization of the transport and physical distribution fields. A fund capable of proposing new means of "leasing" to the transport companies R that have been used to "purchasing" in vehicle procurement and promoting financial improvement by taking assets off the balance sheets as described above is the truck fund. The truck fund is such that the company performs assets management, with trucks T (including trailers) purchased from sellers S as an investment target. Lease charges of the trucks T are the financial source of distributions to investors I.

Thus, the company runs the lease business and the truck fund. Both of the lease business and the truck fund deal in the trucks T. In other words, the company can deal in the trucks T that are dealt by the company itself both in the lease business and in the truck fund. Therefore, customers of the company are the transport companies R in both of the lease business and the truck fund. Note that, in the truck fund, the investors I are also customers of the company. Therefore, if customer information and various types of information about the trucks T (hereinafter referred to as "the vehicle information") are shared between the truck fund and the lease business, it is convenient to the company. Therefore, in the present service, information obtained by integrating various types of information about the lease business (hereinafter referred to as "the lease information"), various types of information about the truck fund (hereinafter referred to as "the fund information), and the vehicle information (hereinafter referred to as "the integrated information") is stored in the integrated DB 11. By members belonging to the company utilizing the integrated information by accessing the integrated DB 11, it becomes possible to further develop the lease business, the fund business, and other businesses related to the trucks T (for example, consultant or data solution businesses).

Specifically, as illustrated in FIG. 1, a salesperson E of the company operates their own terminal 6 (hereinafter referred to as "the salesperson terminal 6") to input business information. The business information includes, for example, "lease deal information" which is business information about the lease business, "fund deal information" which is business information about the truck fund, customer information, business activity information, and the like. A business processing unit 21 of a server 1 managed by a provider of the present service (hereinafter referred to as "the service provider server 1") executes various types of processing about the businesses of the company (in the present example, the lease business and the truck fund). The business processing unit 21 acquires business information inputted to the salesperson terminal 6, stores it in the integrated DB 11 and a customer DB 12, and manages it. For example, within the business information, the lease deal information is stored in the integrated DB 11 as a part of the lease information. Within the business information, the fund deal information is stored in the integrated DB 11 as a part of the fund information. Within the business information, the customer information is stored in the customer DB 12, and customer information about lease business customers and customer information about truck fund customers are stored in the integrated DB 11 as a part of the lease information and as a part of the fund information, respectively. Within the business information, business activity information about the lease business and business activity information about the truck fund are stored in the integrated DB 11 as a part of the lease information and as the fund information, respectively. The business processing unit 21 also stores information received from and transmitted to the sellers S and seller terminals 3 and information received from and transmitted to investor terminals 2 of the investors I as information about a predetermined truck fund in the integrated DB 11 as a part of the fund information and manages the information. The business processing unit 21 also stores information received from and transmitted to terminals 4 of the transport companies R (hereinafter referred to as "transport company terminals 4") as information about the lease business or the truck fund in the integrated DB 11 and manages the information. In this case, information about the lease business and information about the truck fund are stored in the integrated DB 11 as a part of the lease information and as a part of the fund information, respectively.

At the start or end of the lease business or the truck fund, the trucks T leased from the company are delivered to or from each transport company R. Information about the incoming/outgoing delivery of the trucks T is transmitted from the transport company terminal 4 to the service provider server 1. When acquiring the incoming/outgoing delivery information about the trucks T from the transport company terminal 4, a vehicle processing unit 22 of the service provider server 1 stores it in the integrated DB 11 as a part of the vehicle information and manages it.

The company provides application software for inspection of the trucks T leased through the lease business or the truck fund, for the transport companies R. Each transport company R inspects the trucks T using the transport company terminal 4 in which the application software is installed, and inputs information such as the date and time of the inspection, the content of the inspection, and an inspection result (hereinafter referred to as "the inspection information"). Thereby, the inspection information is transmitted from the transport company terminal 4 to the service provider server 1. When acquiring the inspection information about the trucks T from the transport company terminal 4, the vehicle processing unit 22 stores it in the integrated DB 11 as a part of the vehicle information and manages it.

Furthermore, each of the trucks T leased from the company to the transport companies R through the lease business or the truck fund is equipped with a drive recorder 5. Travel information about each truck T acquired by the drive recorder 5 is transmitted to the service provider server 1. When acquiring the travel information from the drive recorder 5 of the truck T, the vehicle processing unit 22 stores it in the integrated DB 11 as a part of the vehicle information and manages it.

Furthermore, for the trucks T leased from the company to each transport company R through the lease business or the truck fund, maintenance by a maintenance person SB is appropriately performed. Information about the maintenance by the maintenance person SB such as the date and time, the content, and a result (hereinafter referred to as "the maintenance history information") is inputted to a terminal 7 of the maintenance person SB (hereinafter referred to as "the maintenance person terminal 7) and transmitted to the service provider server 1. When acquiring the maintenance history information about the trucks T from the maintenance person terminal 7, the vehicle processing unit 22 stores it in the integrated DB 11 as a part of the vehicle information and manages it.

An accounting processing unit 23 of the service provider server 1 executes processing related to accounting of the various types of businesses of the company. In information about the accounting processing by the accounting processing unit 23 (hereinafter referred to as "the accounting information"), accounting information about the lease business and accounting information about the truck fund are stored in the integrated DB 11 as a part of the lease information and as a part of the fund information, respectively.

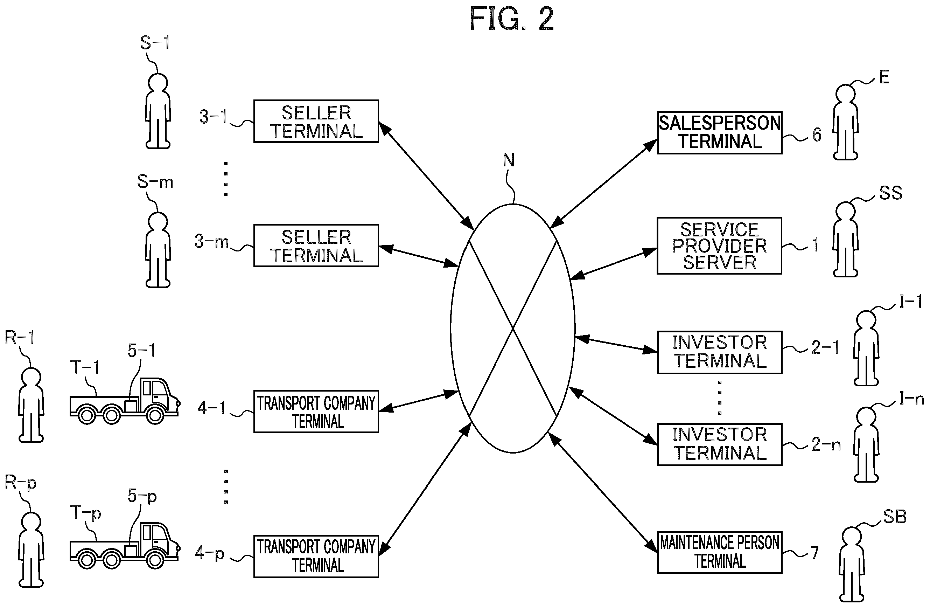

FIG. 2 is a diagram illustrating an outline of a configuration of an information processing system to which the present service of FIG. 1 is applied, that is, an information processing system that includes a service provider server according to the one embodiment of the information processing apparatus of the present invention.

The information processing system illustrated in FIG. 1 is configured by the service provider server 1 operated by a service provider SS, investor terminals 2-1 to 2-n operated by investors I-1 to I-n (n is an arbitrary integer value equal to or larger than 1), respectively, seller terminals 3-1 to 3-m operated by sellers S-1 to S-m (m is an arbitrary integer value equal to or larger than 1), respectively, transport company terminals 4-1 to 4-p operated by transport companies R-1 to R-p (p is an arbitrary integer value equal to or larger than 1), respectively, drive recorders 5-1 to 5-q mounted on trucks T-1 to T-p, respectively, the salesperson terminal 6 operated by the salesperson E, and the maintenance person terminal 7 operated by the maintenance person SB being mutually connected via a predetermined network N such as the Internet.

Note that, when it is not necessary to individually differentiate each of the investors I-1 to I-n, the investor terminals 2-1 to 2-n, the sellers S-1 to S-m, the seller terminals 3-1 to 3-m, the transport companies R-1 to R-p, and the transport company terminals 4-1 to 4-p, they will be referred to as each of "the investors I", each of "the investor terminals 2", each of "the sellers S", each of "the seller terminals 3", each of "the transport companies R", and each of "the transport company terminals 4".

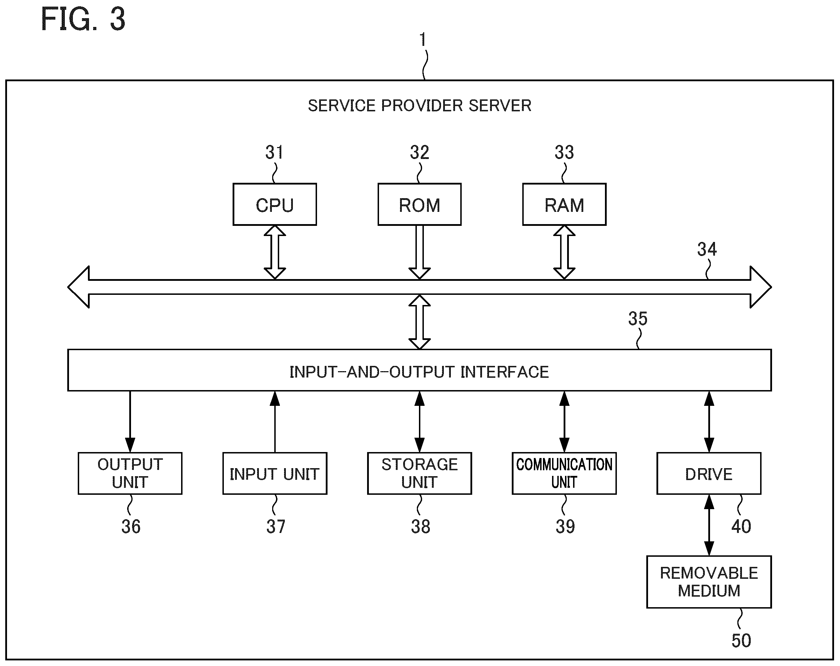

FIG. 3 is a block diagram illustrating a hardware configuration of the service provider server of FIG. 2.

The service provider server 1 includes a central processing unit (CPU) 31, a read only memory (ROM) 32, a random access memory (RAM) 33, a bus 34, an input-and-output interface 35, an output unit 36, an input unit 37, a storage unit 38, a communication unit 39, and a drive 40.

The CPU 31 executes various types of processing according to programs recorded in the ROM 32 or programs loaded from the storage unit 38 to the RAM 33. Data and the like required for the CPU 31 to execute the various types of processing are also appropriately stored in the RAM 33.

The CPU 31, the ROM 32, and the RAM 33 are connected to each other via the bus 34. To the bus 34, the input-and-output interface 35 is also connected. To the input-and-output interface 35, the output unit 36, the input unit 37, the storage unit 38, the communication unit 39, and the drive 40 are connected.

The output unit 36 is configured with a display, a speaker, and the like to output various types of information as images or voice. The input unit 37 is configured with a keyboard, a mouse, and the like to input various types of information.

The storage unit 38 is configured with a hard disk, a dynamic random access memory (DRAM) and the like to store various types of data. The communication unit 39 performs communication with other apparatuses (in the example of FIG. 2, the investor terminals 2-1 to 2-n, the seller terminals 3-1 to 3-m, the transport company terminals 4-1 to 4-p, the drive recorders 5-1 to 5-p, the salesperson terminal 6, and the maintenance person terminal 7) via a network N including the Internet.

The drive 40 is appropriately attached with a removable medium 50 such as a magnetic disk, an optical disk, a magnetic optical disk, or a semiconductor memory. A program read from the removable medium 50 by the drive 40 is installed in the storage unit 38 as necessary. Furthermore, the removable medium 50 is also able to store the various types of data stored in the storage unit 38, similar to the storage unit 38.

Note that, in the information processing system of FIG. 1, each of the investor terminals 2, the seller terminals 3, the transport company terminals 4, the drive recorders 5, the salesperson terminal 6, and the maintenance person terminal 7 as the one embodiment of the present invention also has the hardware configuration illustrated in FIG. 2, though it is not illustrated.

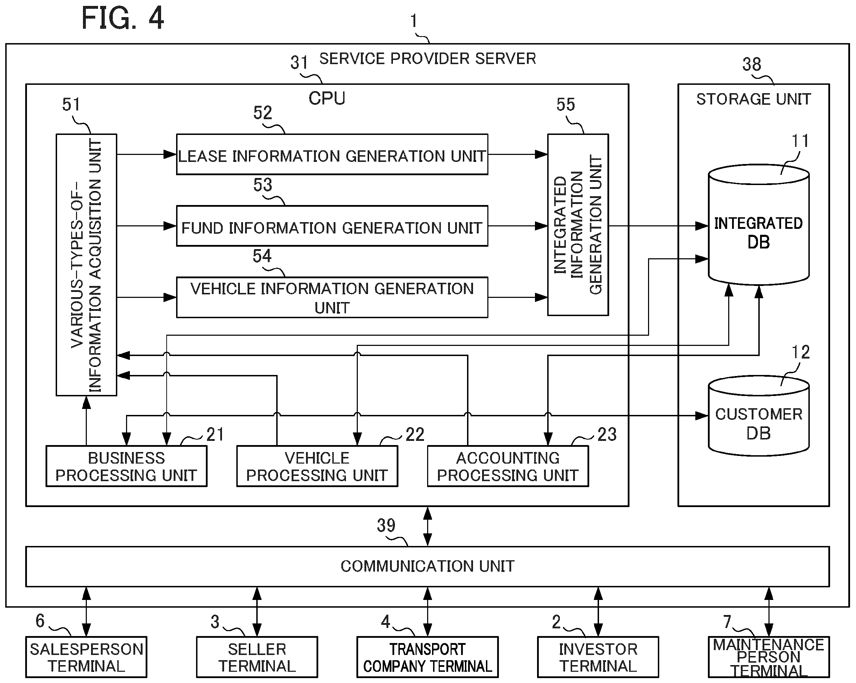

FIG. 4 is a functional block diagram illustrating an example of a functional configuration of the service provider server of FIG. 3.

In the CPU 31 of the service provider server 1, the business processing unit 21, the vehicle processing unit 22, the accounting processing unit 23, a various-types-of-information acquisition unit 51, a lease information generation unit 52, a fund information generation unit 53, a vehicle information generation unit 54, and an integrated information generation unit 55 function as illustrated in 4. In an area of the storage unit 38, the integrated DB 11 and the customer DB 12 are provided.

Each of the business processing unit 21, the vehicle processing unit 22, and the accounting processing unit 23 executes the various types of processing described above using FIG. 1, while giving and receiving various types of information to and from at least a part of the investor terminals 2, the seller terminals 3, the transport company terminals 4, the drive recorders 5, the salesperson terminal 6, and the maintenance person terminal 7.

The various-types-of-information acquisition unit 51 acquires various types of information that each of the business processing unit 21, the vehicle processing unit 22, and the accounting processing unit 23 gives and receives at the time of executing various types of processing.

The lease information generation unit 52 extracts information related to the lease business from the various types of information acquired by the various-types-of-information acquisition unit 51 and generates lease information based on the information extracted. Specifically, for example, the lease information generation unit 52 extracts the information related to the lease business, such as lease deal information, the information related to the lease business given to and received from the transport company terminals 4, the accounting information related to the lease business, and the like from the pieces of business information and generates the lease information based on the pieces of information extracted as described above with reference to FIG. 1.

The fund information generation unit 53 extracts information related to the truck fund from the various types of information acquired by the various-types-of-information acquisition unit 51 and generates fund information based on the information extracted. Specifically, for example, the fund information generation unit 53 extracts the information related to the truck fund, such as fund deal information, the information related to the truck fund given to and received from each of the investor terminals 2, the seller terminals 3, and the transport company terminals 4, the accounting information related to the truck fund, and the like from the pieces of business information and generates the fund information based on the pieces of information extracted as described above with reference to FIG. 1.

The vehicle information generation unit 54 extracts information related to the trucks T from the various types of information acquired by the various-types-of-information acquisition unit 51 and generates vehicle information based on the information extracted. Specifically, for example, the vehicle information generation unit 54 extracts the inspection information and incoming/outgoing delivery information about the trucks T transmitted from the transport company terminals 4 and the travel information transmitted from the drive recorder 5 of each truck T, the maintenance history information transmitted from the maintenance person terminal 7, and the like and generates the vehicle information based on the pieces of information extracted as described above with reference to FIG. 1.

The integrated information generation unit 55 generates integrated information by associating the lease information, the fund information, and the vehicle information, stores it in the integrated DB 11, and manages it.

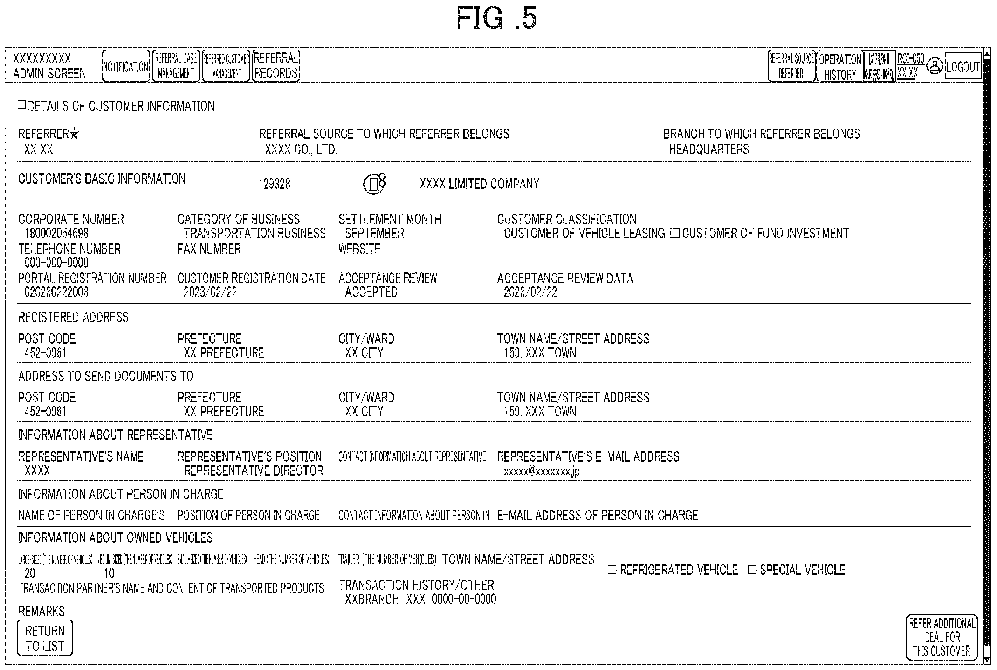

Furthermore, specific examples of the present service utilizing the integrated DB 11 of FIG. 1 will be described below, appropriately with reference to screen examples of FIGS. 5 to 24.

FIGS. 5 to 9 illustrate examples of screens for registering or confirming customers of the company that runs the lease business and the truck fund and uses the present service of FIG. 1. As the customers, the transport companies R that utilize the lease business to lease the trucks T and the investors I who purchase the truck fund as a product exist. Furthermore, as those who register a customer using a customer registration screen, the customer himself (each of the transport companies R or the investors I themselves), the salesperson E of the company, those related to the company (for example, financial institutions), and the like exist. The screens of FIGS. 5 to 9 are examples of screens for a financial institution to refer a customer to the company and register the customer, or confirm the registered content.

The financial institution (a person in charge) operates a terminal not illustrated to display the customer registration screen of FIG. 5, and registers basic information about the customer referred to the company (who is also a customer of the financial institution itself). Note herein that registration means that the basic information is not only stored in the customer DB 12 of FIG. 1 but also associated with the integrated information in the integrated DB 11. Therefore, the financial institution can operate the terminal not illustrated to access the business processing unit 21 of the service provider server 1 and confirm various types of information about the referred (and registered) customer. For example, the financial institution can confirm not only the situation of the referred customer, such as the status of "under negotiation", "advance order", or "contract conclusion", but also the monthly number of referrals, contract conclusion records, and charges.

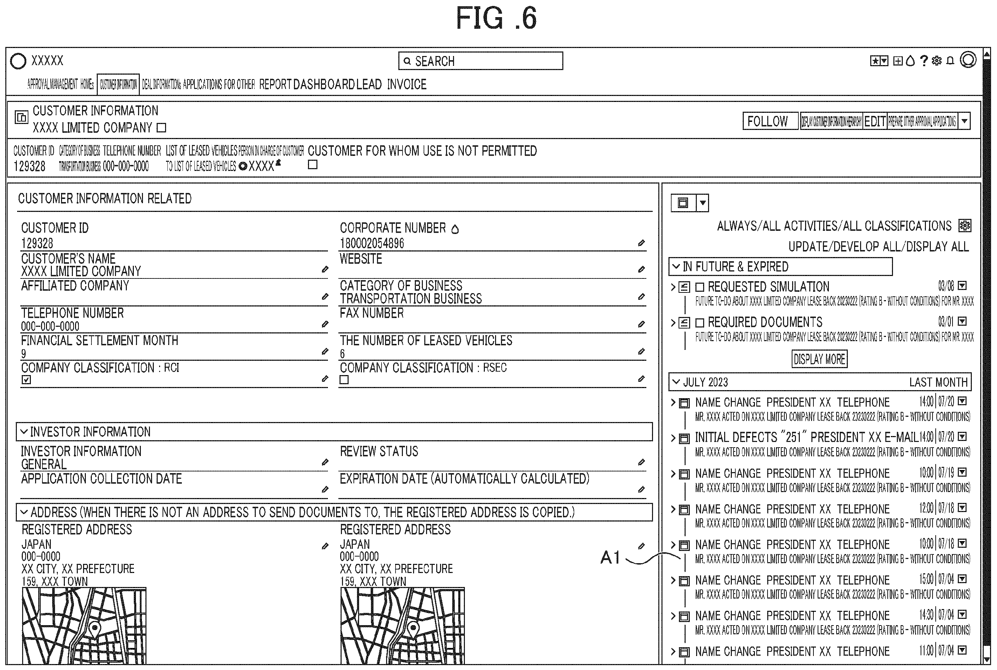

After completing registration of the customer on the customer registration screen of FIG. 5, the financial institution operates the terminal not illustrated to reflect the registration on SF customer data (data registered with the customer DB 12 of FIG. 1) using a customer data screen of FIGS. 6 to 8.

For example, the financial institution can record activities for the target customer in an activity history area A1 in the customer data screen of FIG. 6.

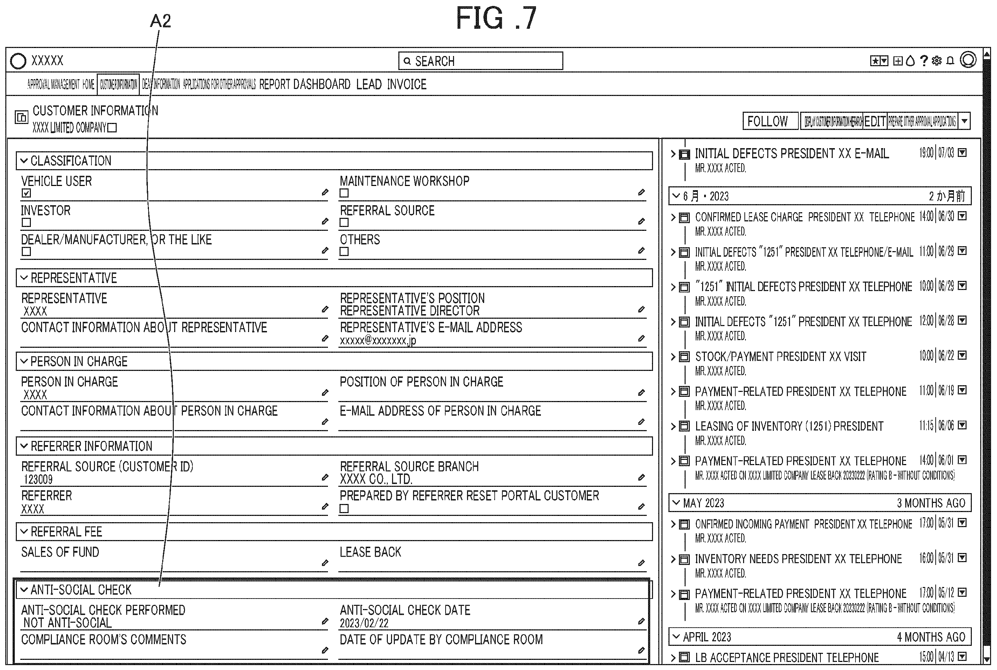

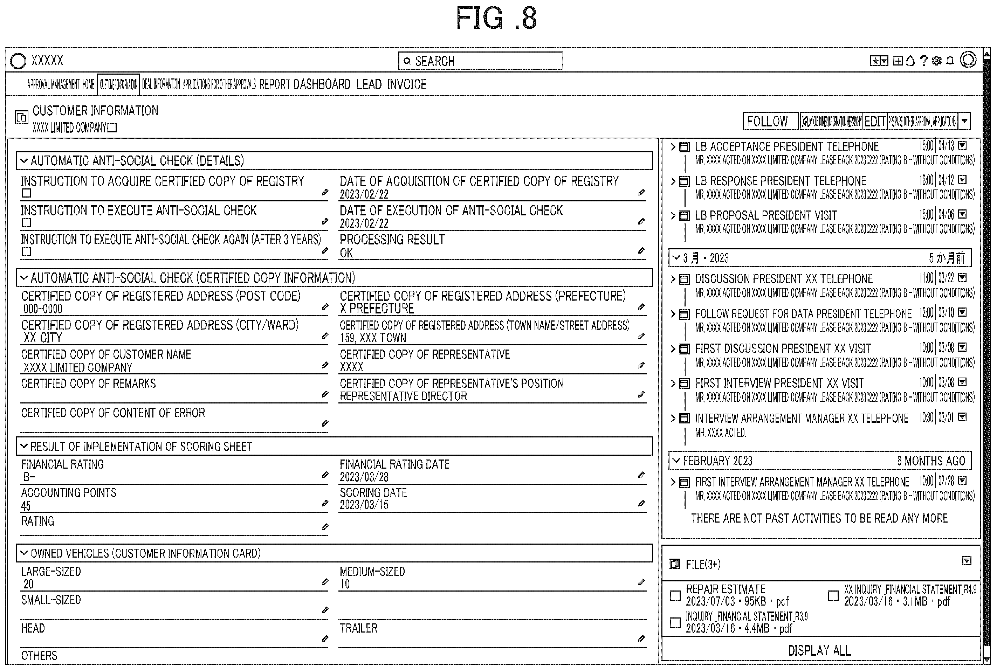

For example, the financial institution can automatically perform anti-social check by RPA in an area A2 in the customer data screen of FIG. 7. For example, it is possible to acquire a certified copy at a certified copy acquisition site. Then, it becomes possible to make an anti-social inquiry on SP Network (registered trademark). A result of the anti-social check is displayed on the terminal of the financial institution, for example, like the screen of FIG. 8.

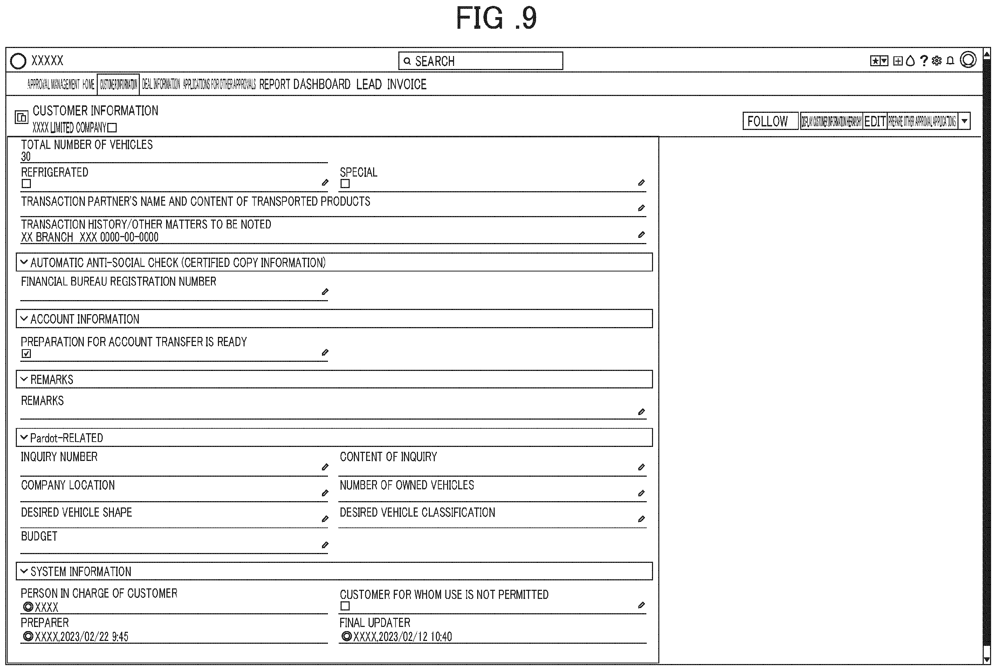

After completing the anti-social check, the financial institution operates the terminal not illustrated to make a customer proposal and proceed with approval application on the screen of FIG. 9.

The screen examples related to registration of a customer has been described above. Next, screen examples related to registration of the trucks T will be described.

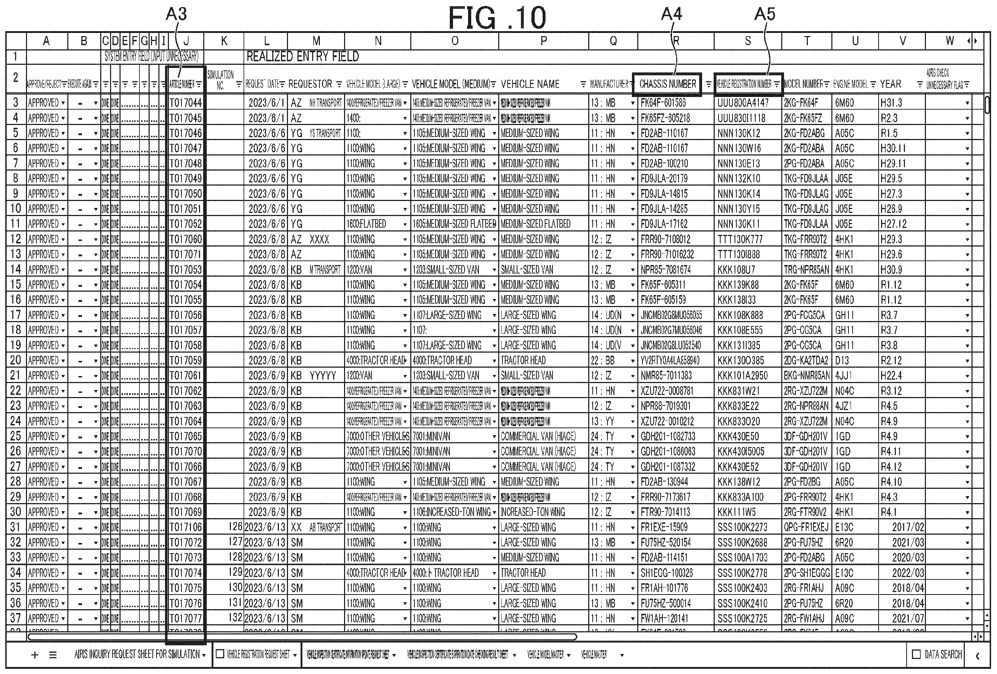

FIG. 10 is a diagram illustrating an example of a screen for registering trucks (vehicles) owned by the company or the truck fund that uses the present service of FIG. 1. A person in charge in the company operates a terminal not illustrated to display the screen of the example of FIG. 10, acquire article numbers of trucks owned by the company or a truck fund F, and register pieces of vehicle information corresponding to the article numbers in the integrated DB 11. Note herein that, at the time of acquiring the article numbers, the service provision server 1 obtains pieces of vehicle inspection certificate information using RPA. For example, the service provision server 1 obtains the pieces of vehicle inspection certificate information from AIRIS (registered trademark) (Vehicle Inspection Registration Information Service). In the example of FIG. 10, Google (registered trademark) Spreadsheet (registered trademark) is adopted. A predetermined line is associated with a truck T with a predetermined article number, and, on the predetermined line, necessary information is inputted for each item together with the predetermined article number. For example, article numbers are inputted under an item A3; chassis numbers are inputted under an item A4; and vehicle registration numbers are inputted under an item A5. Under each of other items, pieces of information constituting vehicle inspection certificate information are inputted. Each piece of vehicle inspection certificate information is obtained at AIRIS (registered trademark) based on input information about a chassis number and a vehicle registration number. The content inputted as on the screen of FIG. 10 is registered with the integrated DB 11 as vehicle information in a predetermined format (as a vehicle master).

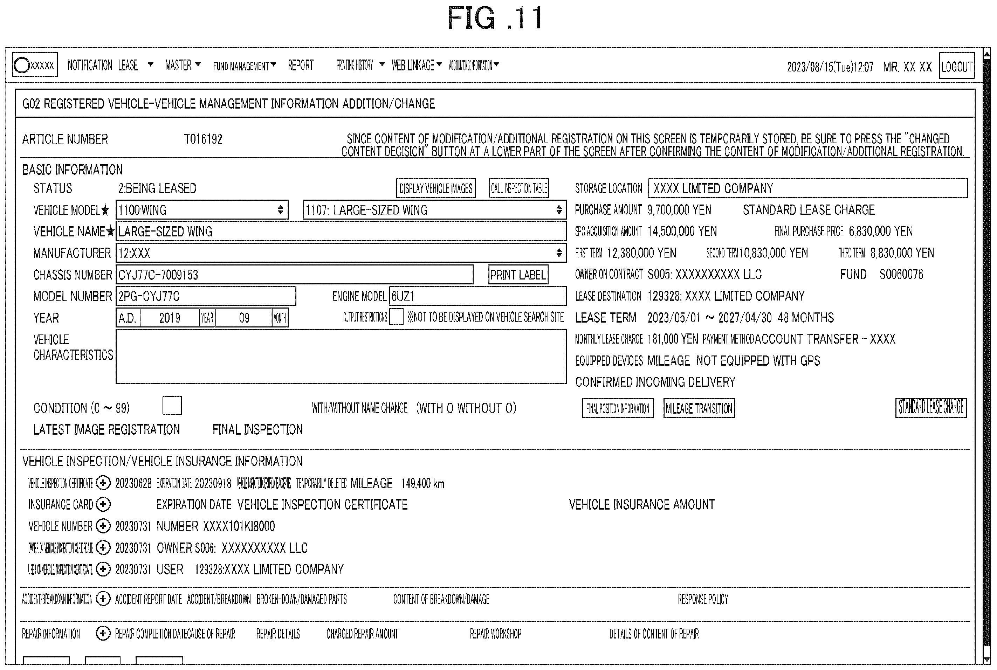

FIG. 11 is a diagram illustrating an example of a screen for confirming information registered as the trucks owned by the company or truck fund that uses the present service of FIG. 1 using the screen of the example of FIG. 10. That is, though vehicle information about a predetermined truck T can be confirmed in the form of the predetermined format (the vehicle master), it can be confirmed as integrated information associated with lease information as illustrated in the example of FIG. 11, for example, when the predetermined truck T is subject to lease of the lease business.

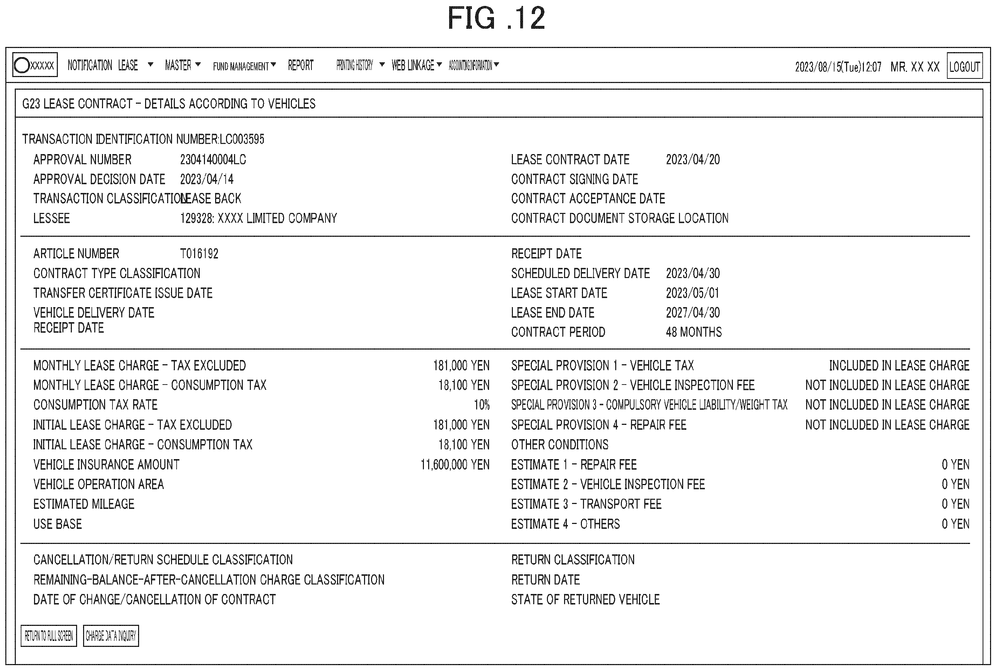

Furthermore, for a predetermined truck T, after a contract of lease of the truck T with a customer (a transport company R) is completed, journal entry data for the lease contract concerned can be created as one of pieces of lease information (integrated information associated with vehicle information) using the screen of an example of FIG. 12. FIG. 12 is a diagram illustrating an example of a screen used by the company that uses the present service of FIG. 1, which is a screen for, after a contract with a customer for a predetermined truck the vehicle information about which exists is completed, generating journal entry data for the target lease contract in the lease business. As can be seen from the screen of the example of FIG. 12, data of the monthly lease charge and lease period for each truck T is stored in the integrated DB 11 as one of the pieces of lease information (integrated information associated with vehicle information). For example, only by an accounting person of the company operating a terminal not illustrated to display the screen of the example of FIG. 12 and pressing a "Billing Data Inquiry" button, journal entry data is automatically generated by the service provider server 1. When the journal entry data is created in this way, the accounting person can easily cause Yayoi (registered trademark) accounting system to read the journal entry data as CSV (registered trademark) data, though it is not illustrated.

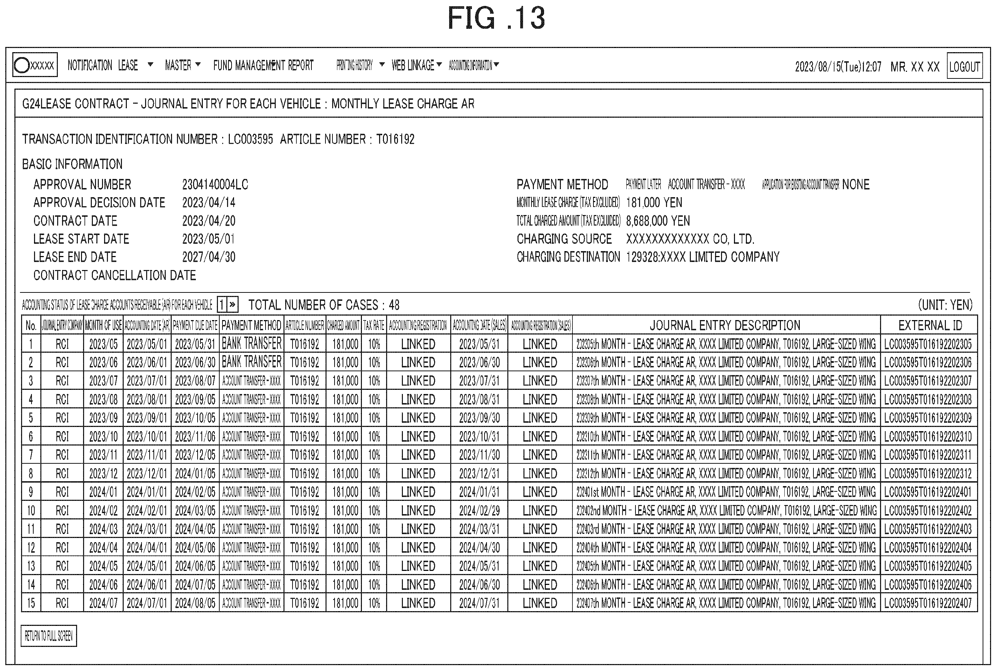

Furthermore, as illustrated in a screen example of FIG. 13, journal entry data is held for each of a plurality of trucks T, and the service provider server 1 performs linkage (association between the latest vehicle information and the latest lease information to update the integrated information) on a specified day each month. FIG. 13 is a diagram illustrating an example of a screen used by the company that uses the present service of FIG. 1, which is a screen for confirming journal entry data for each of a plurality of trucks for which vehicle information exists.

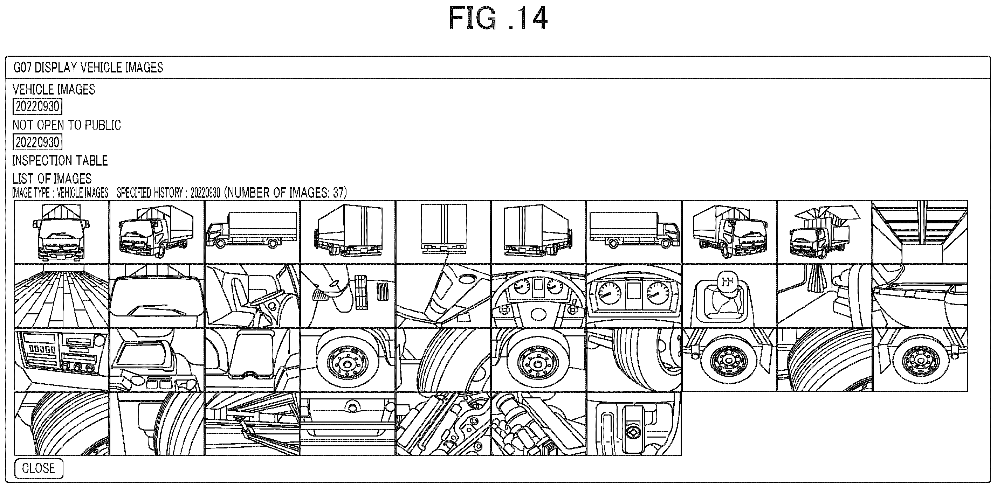

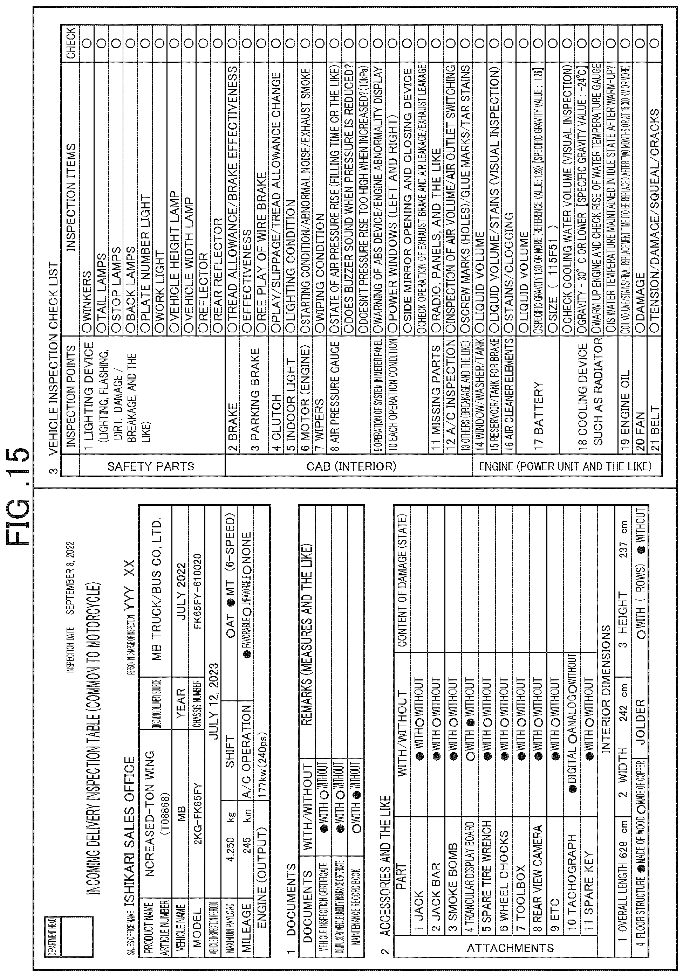

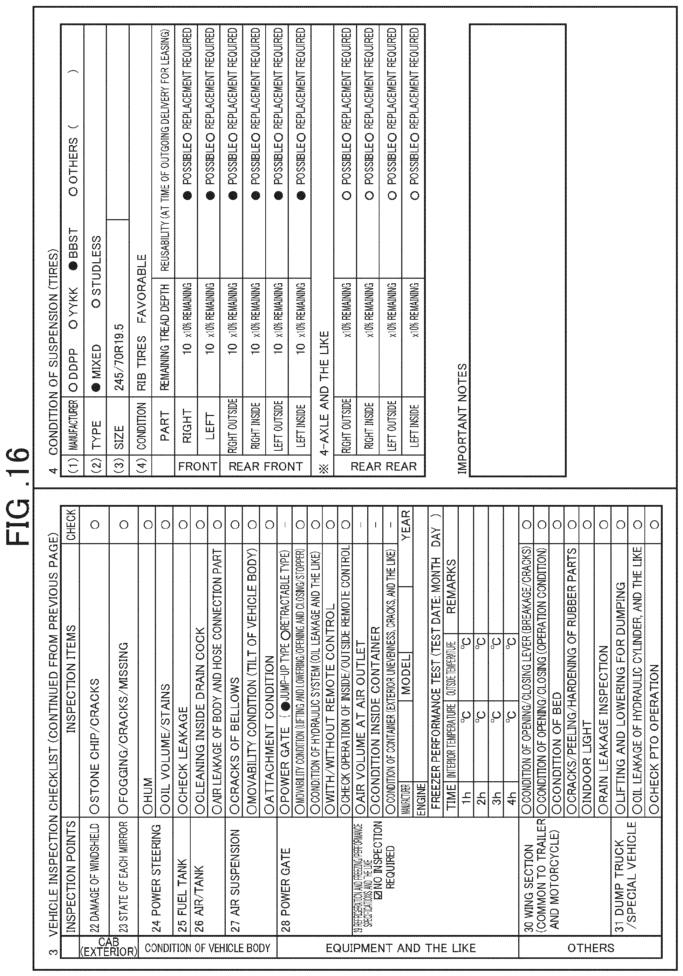

As for each truck T that has been returned because of expiration of a lease contract period, inspection and photography at the time of incoming delivery are conducted in each yard, and a result of the inspection and data of photographs are stored in the integrated DB 11 as a part of vehicle information and managed. Then, after that, detailed history data, such as how much maintenance cost has been required for which truck T, is also added to the vehicle information and managed. FIG. 14 is a diagram illustrating an example of an image for registering or confirming data of photographs taken at the time of incoming delivery of a predetermined truck returned because of expiry of a lease contract period to a predetermined yard, as a part of vehicle information about the predetermined truck. FIGS. 15 and 16 are diagrams illustrating an example of an image for registering or confirming data of a result of an inspection conducted at the time of the incoming delivery of the predetermined truck returned because of expiry of the lease contract period to the predetermined yard, as a part of the vehicle information about the predetermined truck.

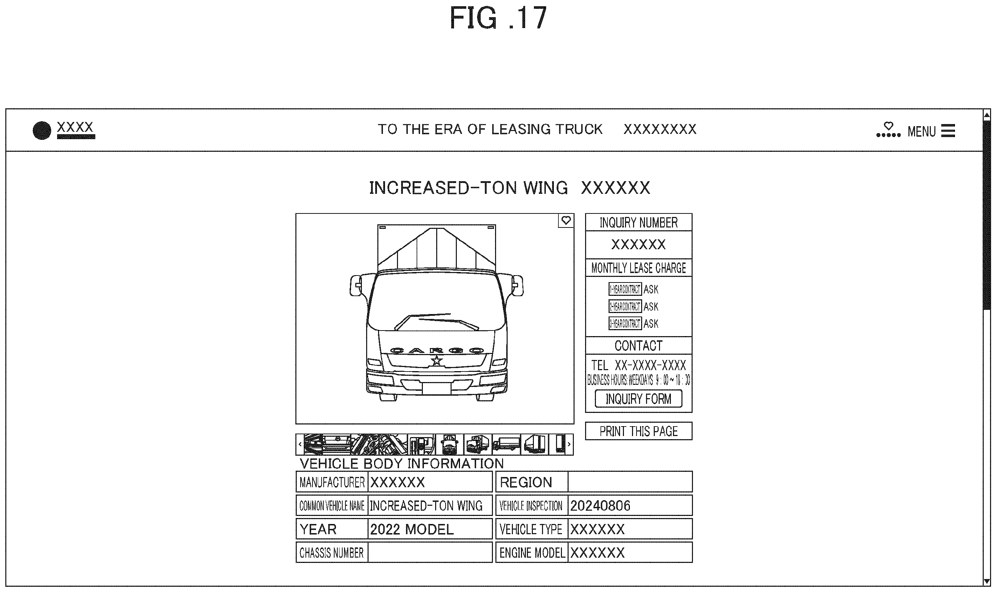

Furthermore, information about the returned truck T is displayed on a Website managed by the service provider server as illustrated in FIG. 17. That is, it becomes possible to find a new lease destination in the lease business. Note that, it is, of course, possible not to display the information about the truck T on the Website according to the state of the truck T. FIG. 17 is a diagram illustrating an example of a predetermined page of the Website where information about uncontracted trucks that are candidates for being leased in a lease business are displayed. On the Website of the example of FIG. 17, the information about the trucks T to be the candidates is vehicle information about the trucks T extracted from the integrated DB 11 of FIG. 1. The amount of the monthly lease charge differs according to each customer (each transport company R) based on the credit of the customer. That is, if customer information about a person who is viewing the Website is registered with the customer DB 12 of FIG. 1, monthly lease charges, which are indicated by ASKs in the example of FIG. 17, are automatically displayed (automatically calculated) as amounts applied to the customer, by the customer logging in to the Website. Note that, as for the Website for the lease business, though only inquiry is possible in the example of FIG. 17, it is a mere example. It may be possible to enable "contract information inquiry", "new lease contract", "renewal of lease contract", "return procedure", "document transmission", and the like by logging in to the Website.

The integrated information, which is a combination of the vehicle information and the lease information, and the examples of the screens for registering and confirming the integrated information have been described above. Hereinafter, integrated information, which is a combination of at least either the vehicle information and the lease information and the fund information, and examples of screens for registering and confirming the integrated information will be described. Note herein that the reason why it is described that the target to be combined with the fund information is at least either the vehicle information and the lease information is that the trucks T subject to investment by the truck fund F may be those that have been already leased in the lease business or may be those independent of the lease business (those that are not subject to lease in the lease business).

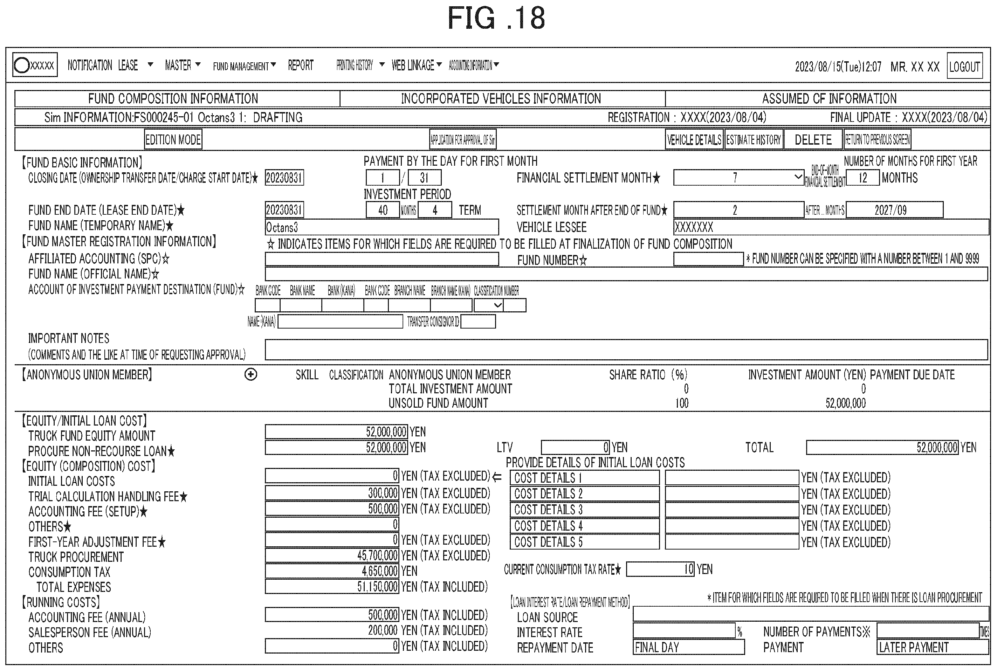

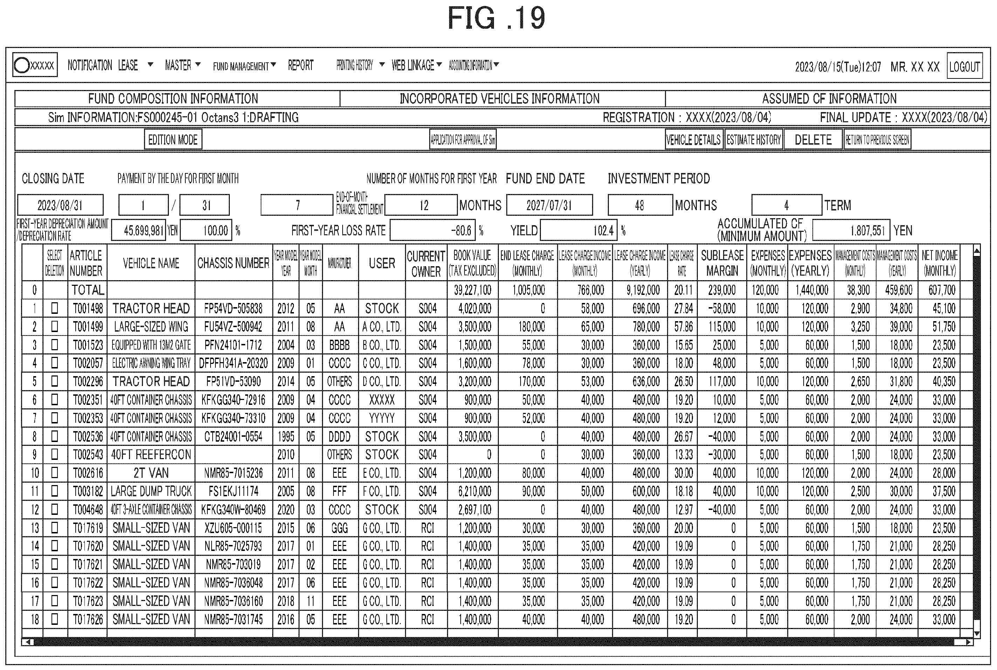

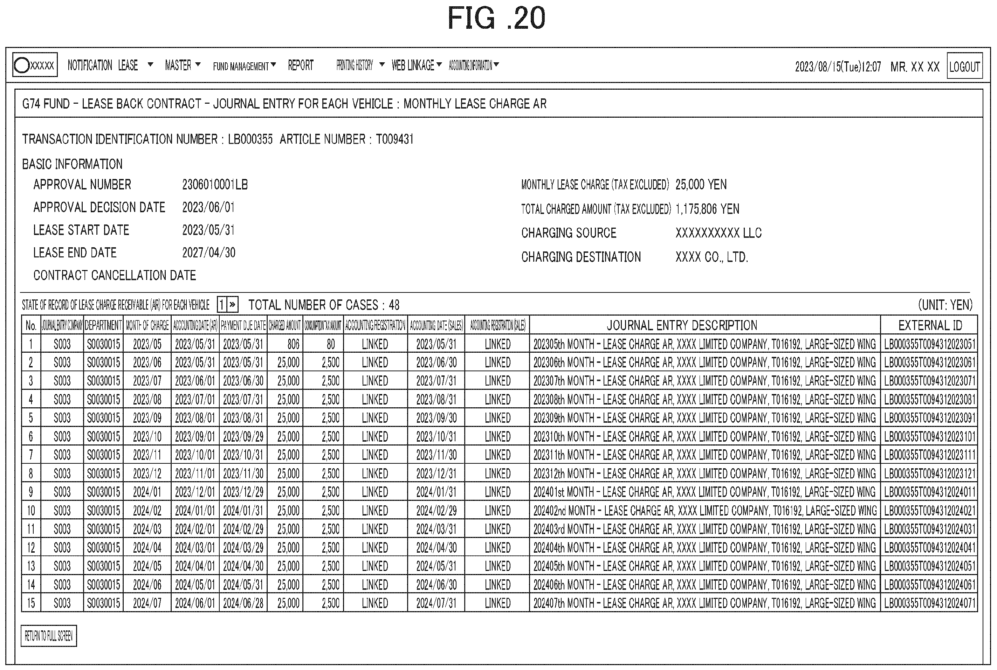

FIG. 18 illustrates a screen used by the company that uses the present service of FIG. 1, which is a screen for inputting basic information, among screens for composing a truck fund. FIG. 19 illustrates a screen used by the company that uses the present service of FIG. 1, which is a screen for selecting t trucks (t is an integer value equal to or larger than 1) to be incorporated and inputting information about the t trucks, among the screens for composing a truck fund. Note herein that composition includes not only decision of the content of the truck fund F to be actually sold to the investors I but also creation of one or more candidates for the truck fund F by simulation. In examples of FIG. 20 and subsequent drawings, however, it is assumed that the content of the truck fund F to be actually sold to the investors I has been decided by performing composition using the screens of FIGS. 18 and 19.

The service provider server 1 stores the content of the composed truck fund F in the integrated DB 11 as fund information. At that time, the fund information is associated with pieces of vehicle information about t trucks incorporated in the truck fund F, associated with pieces of lease information if there are those that are leased in the lease business among the t trucks T, and stored in the integrated DB 11 as integrated information and managed. For the composed truck fund T, the salesperson E of the company uses the salesperson terminal 6 to perform a process of approval for the composition on the system (SF) using the customer DB 12 and performs sales to the investors I registered as customers. When an investor I purchases the truck fund T, information about the investor I and the fund information about the truck fund F are associated (the integrated information is updated).

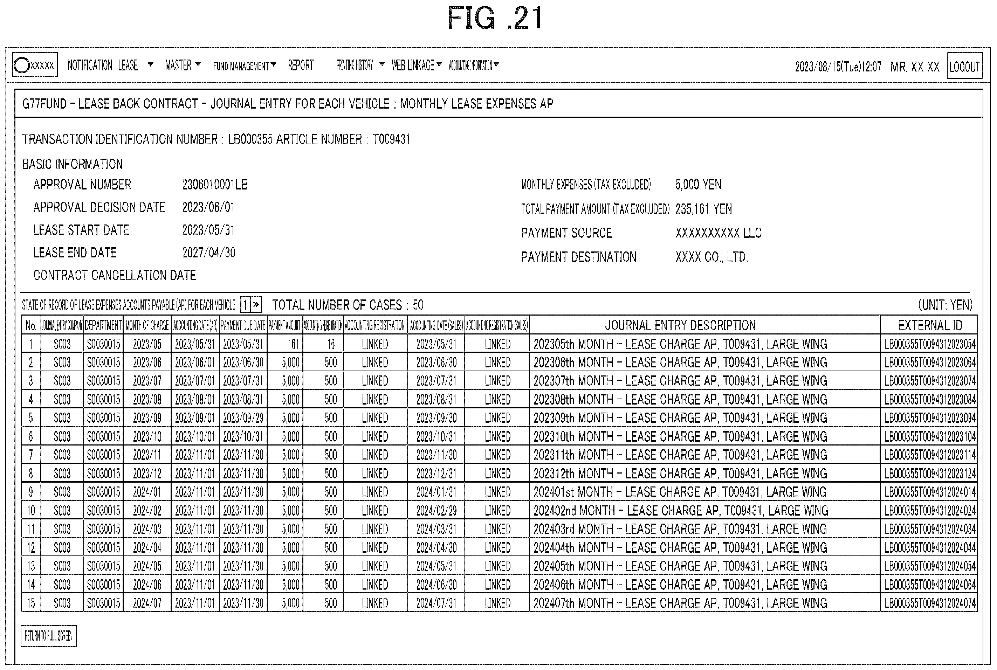

Furthermore, journal entry data on the truck fund T side is also automatically created by the service provider server 1 as a part of the integrated information, and it becomes possible to link the journal entry data with accounting information of Yayoi (registered trademark). Note herein that the truck fund F can take a form of concluding an asset management contract with the company and leasing the incorporated t trucks T to the company. In this case, the company leases the trucks T leased from the truck fund F to the transport companies R, as being subject to the lease business. FIG. 20 is a diagram illustrating an example of a screen for confirming journal entry of charges from the truck fund to the company (lease charges of the incorporated trucks). Furthermore, the company performs management of the trucks leased from the truck fund F based on the asset management contract described above. As for management costs required therefor, the company charges the truck fund F for the costs (for the truck fund F, the management costs is one of expenditure sources). FIG. 21 is a diagram illustrating an example of a screen for confirming journal entry of charges from the company to the truck fund (management costs and the like).

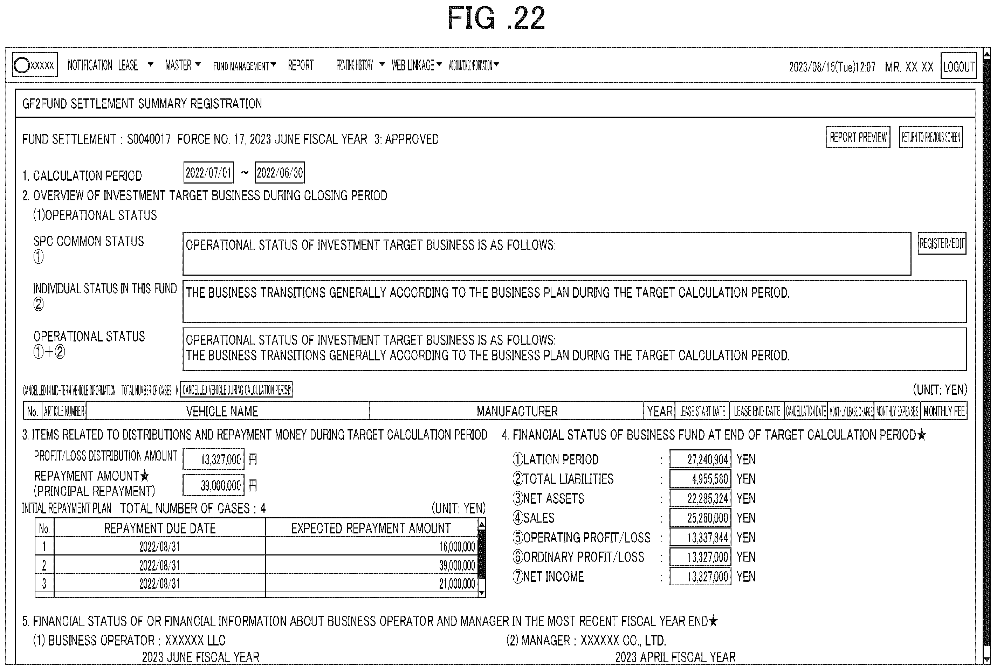

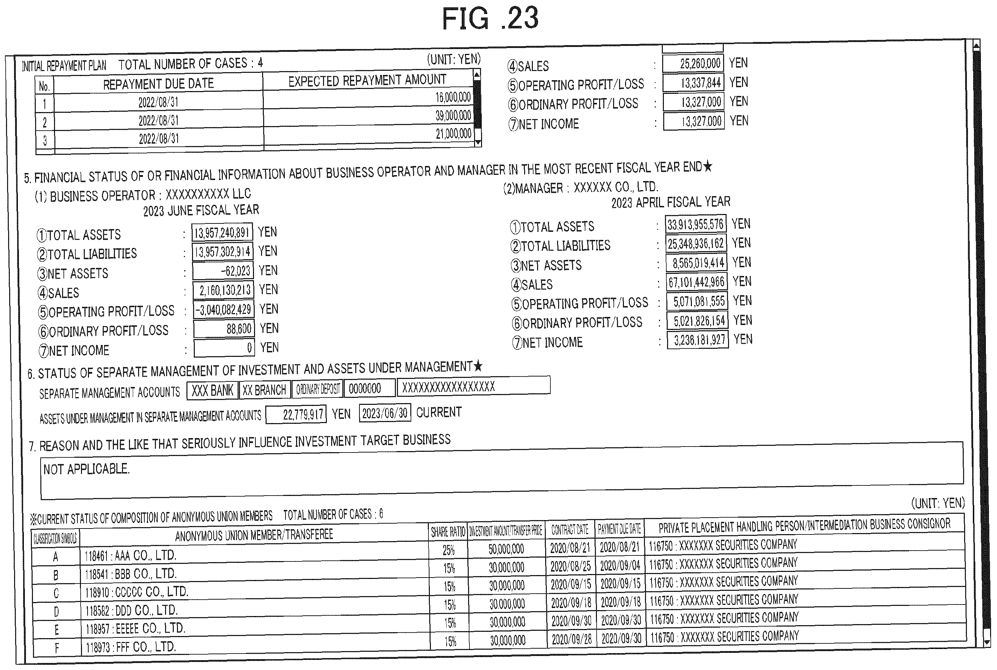

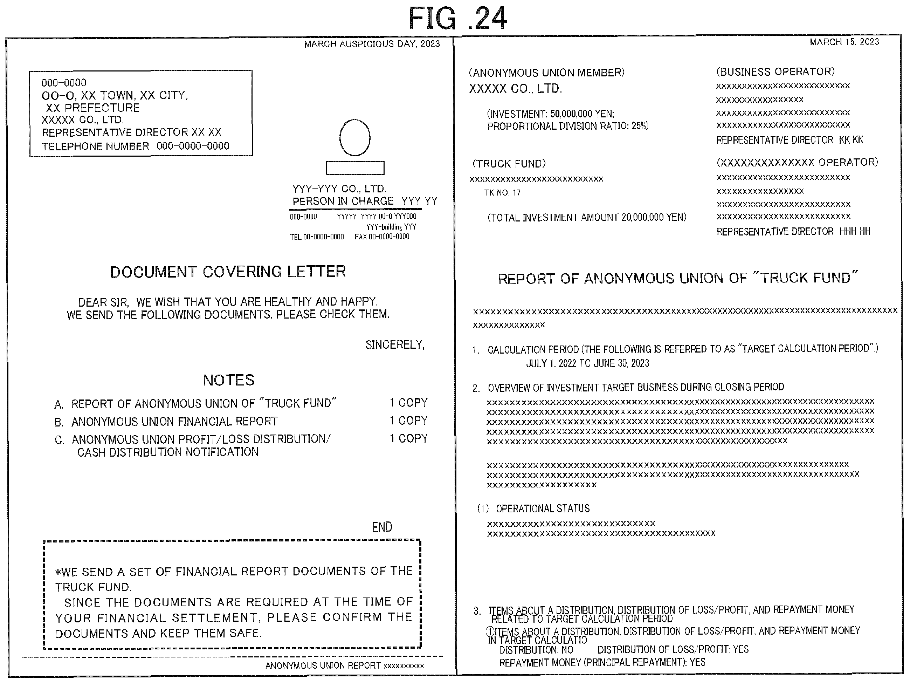

Furthermore, as for account settlement information about each of a plurality of truck funds T that the company manages by asset management, it is also possible to manage the account settlement information by the service provider server 1 as the fund information (the integrated information), and it is also possible to automatically output a business report, a principal repayment request document, and the like by RPA. FIGS. 22 and 23 are diagrams illustrating an example of a screen for registering a financial summary in account settlement information about a truck fund. FIG. 24 illustrates an example of a business report of the truck fund F. In the example of FIG. 24, the business report is outputted as Excel (registered trade mark) data.

Although an embodiment of the present invention has been described above, the present invention is not limited to the embodiment described above. The present invention still includes modifications, improvements, and the like to the extent that the object of the present invention can be achieved.

For example, the integrated information stored in the integrated DB 11 and managed is generated from the lease information, the fund information, and the vehicle information because it is assumed that the company runs the lease business and the truck fund in the above embodiment. The integrated information, however, is not especially limited thereto. For example, a predetermined organization such as a company runs N businesses (N is an integer value equal to or larger than 2), and products or objects provided for services are common among the N businesses, information obtained by associating information about each of the N businesses with information about the objects may be stored in the integrated DB 11 as the integrated information. Note herein that, though the objects are trucks in the embodiment described above, the objects are not limited thereto and may be vehicles or other things.

For example, the hardware configuration illustrated in FIG. 3 is a mere example for achieving the object of the present invention. The present invention is not especially limited to the hardware configuration.

Furthermore, the functional block diagram illustrated in FIG. 4 is a mere example. The present invention is not particularly limited to the functional block diagram. That is, it is sufficient if an information processing apparatus has functions that make it possible to execute the series of processing described above. What functional blocks and databases are to be used to realize the functions is not especially limited to the example of FIG. 4.

Furthermore, locations at which the functional blocks and the databases are present are not limited to the locations in FIG. 4. Arbitrary locations may be selected. Furthermore, one functional block or database may be configured with a single piece of hardware, a single piece of software, or a combination thereof.

In the case of causing processing of each functional block to be executed by software, a program constituting the software is installed in a computer or the like from a network or a recording medium. The computer may be a computer that is incorporated in dedicated hardware. Furthermore, the computer may be a computer capable of executing various types of functions by various types of programs being installed therein, for example, a general-purpose smartpohone or personal computer, in addition to a server.

A recording medium storing such programs is not only configured with a removable medium distributed separately from an apparatus main body to provide the programs for each user but also configured with a recording medium provided for each user in a state of being incorporated in the apparatus main body in advance.

To summarize the above, it is sufficient if the information processing apparatus to which the present invention is applied takes a configuration as described below, and the information processing apparatus can take various embodiments. That is, it is sufficient if,
when the predetermined organization runs N businesses (N is an integer value equal to or larger than 2), (for example, a lease business and a truck fund), and products or objects provided for services of the N businesses are common objects (for example, the trucks T of FIG. 1), the information processing apparatus to which the present invention is applied includes:
an information acquisition unit (for example, the various-types-of-information acquisition unit 51 of FIG. 4) acquiring information related to at least a part of the N businesses and the objects;
a business information generation unit (for example, the lease information generation unit 52 and the fund information generation unit 53 of FIG. 4) extracting pieces of information about a predetermined business from the information acquired, for the N businesses, respectively and independently, and generating first business information to N-th business information based on the pieces of information extracted for the N businesses, respectively;
an object information generation unit (for example, the vehicle information generation unit 54 of FIG. 4) extracting information about the objects from the information acquired and generating object information based on the information extracted; and
an integrated information generation unit (for example, the integrated information generation unit 55 of FIG. 4) generating integrated information by associating the first business information to the N-th business information and the object information, storing the integrated information in a predetermined database (for example, the integrated DB 11 of FIG. 4), and managing the integrated information. Thereby, it is possible to, for an organization which runs a plurality of businesses among which products or objects provided for providing services are common, establish information management that contributes to the organization efficiently performing management of the plurality of businesses and developing the plurality of businesses together.

Note herein that the objects are vehicles;
the N businesses include a lease business of leasing the vehicles to a lessor and a fund with the vehicles leased to the lessor as a target;
the business information generation unit includes:
   a lease information generation unit (for example, the lease information generation unit 52 of FIG. 4) extracting information related to the lease business from the information acquired and generating lease information as the first business information based on the information extracted; and
   a fund information generation unit (for example, the fund information generation unit 53 of FIG. 4) extracting information related to the fund from the information acquired and generating fund information as second business information based on the information extracted; and
   the object information generation unit (for example, the vehicle information generation unit 54 of FIG. 4) can extract information related to the vehicles from the information acquired and generates vehicle information as the object information based on the information extracted; and the integrated information generation unit (for example, the integrated information generation unit 55 of FIG. 4) can generate the integrated information by associating the lease information, the fund information, and the vehicle information.

Note that, in the present specification, steps describing programs recorded in a recording medium include not only processes chronologically executed in order of the steps but also processes that may not be necessarily chronologically executed but may be executed in parallel or separately.

Furthermore, in the present specification, the term "system" means an overall apparatus configured with a plurality of devices, a plurality of means, and the like.

### EXPLANATION OF REFERENCE NUMERALS

1...service provider server
2, 2-1, 2-n...investor terminal
3, 3-1, 3-m...seller terminal
4, 4-1, 4-p...transport company terminal
5, 5-1, 5-p...drive recorder
6...salesperson terminal
7...maintenance person terminal
11...integrated DB
12... customer DB
21...business processing unit
22...vehicle processing unit
23...accounting processing unit
31...CPU
32...ROM
33... RAM
34...bus
35...input-and-output interface
36...output unit
37...input unit
38...storage unit
39...communication unit
40...drive
50...removable medium
51...various-types-of-information acquisition unit
52...lease information generation unit
53...fund information generation unit
54...vehicle information generation unit
55...integrated information generation unit
SS...service provider
I, I-1, I-n...investor
S, S-1, S-m...seller
R, R-1, R-p...transport company
E...salesperson
SB...maintenance person
N...network

## Claims

1. An information processing apparatus managing information for supporting a predetermined organization when the predetermined organization runs N businesses (N is an integer value equal to or larger than 2), and products or objects provided for services of the N businesses are common objects, the information processing apparatus comprising:
an information acquisition unit acquiring information related to at least a part of the N businesses and the objects;
a business information generation unit extracting pieces of information about a predetermined business from the information acquired, for the N businesses, respectively and independently, and generating first business information to N-th business information based on the pieces of information extracted for the N businesses, respectively;
an object information generation unit extracting information about the objects from the information acquired and generating object information based on the information extracted; and
an integrated information generation unit generating integrated information by associating the first business information to the N-th business information and the object information, storing the integrated information in a predetermined database, and managing the integrated information.

2. The information processing apparatus according to claim 1, wherein the objects are vehicles;
the N businesses include a lease business of leasing the vehicles to a lessor and a fund with the vehicles leased to the lessor as a target;
the business information generation unit comprises:
a lease information generation unit extracting information related to the lease business from the information acquired and generating lease information as the first business information based on the information extracted; and
a fund information generation unit extracting information related to the fund from the information acquired and generating fund information as second business information based on the information extracted;
the object information generation unit extracts information related to the vehicles from the information acquired and generates vehicle information as the object information based on the information extracted; and
the integrated information generation unit generates the integrated information by associating the lease information, the fund information, and the vehicle information.

3. An information processing method executed by an information processing apparatus, the information processing apparatus managing information for supporting a predetermined organization when the predetermined organization runs N businesses (N is an integer value equal to or larger than 2), and products or objects provided for services of the N businesses are common objects, the information processing method comprising:
an information acquisition step of acquiring information related to at least a part of the N businesses and the objects;
a business information generation step of extracting pieces of information about a predetermined business from the information acquired, for the N businesses, respectively and independently, and generating first business information to N-th business information based on the pieces of information extracted for the N businesses, respectively;
an object information generation step of extracting information about the objects from the information acquired and generating object information based on the information extracted; and
an integrated information generation step of generating integrated information by associating the first business information to the N-th business information and the object information, storing the integrated information in a predetermined database, and managing the integrated information.

4. A program causing a computer to execute a control process, the computer managing information for supporting a predetermined organization when the predetermined organization runs N businesses (N is an integer value equal to or larger than 2), and products or objects provided for services of the N businesses are common objects, the control process comprising:
an information acquisition step of acquiring information related to at least a part of the N businesses and the objects;
a business information generation step of extracting pieces of information about a predetermined business from the information acquired, for the N businesses, respectively and independently, and generating first business information to N-th business information based on the pieces of information extracted for the N businesses, respectively;
an object information generation step of extracting information about the objects from the information acquired and generating object information based on the information extracted; and
an integrated information generation step of generating integrated information by associating the first business information to the N-th business information and the object information, storing the integrated information in a predetermined database, and managing the integrated information.
